# EUROPEAN PATENT SPECIFICATION

(11) **EP 3 031 708 B1**
(45) Date of publication and mention of the grant of the patent: **11.03.2020**
(21) Application number: 14004194.8
(22) Date of filing: 12.12.2014
(51) Int. Cl.: B62K 21/22

(54) **Device for changing suspension geometry of a vehicle**
Vorrichtung zum Ändern der Aufhängungsgeometrie eines Fahrzeugs
Dispositif de changement de géométrie de suspension d'un véhicule

(43) Date of publication of application: 15.06.2016
(73) Proprietor: Vysoká Skola Bánská - Technická Univerzita Ostrava, 708 00 Ostrava-Poruba (CZ)
(72) Inventor: Smiraus, Jakub, CZ-78901 Zábreh (CZ); Richtár, Michal, CZ-70833 Ostrava 8 (CZ); Míková, Jana, CZ-72300 Ostrava - Martinov (CZ); Halama, Radim, 708 00 Ostrava-Poruba (CZ)
(74) Representative: Kendereski, Dusan

(56) References cited:
- CZ-B6- 303 473
- DE-U1- 20 315 353
- FR-A1- 2 901 227
- IT-A1- BO20 080 521
- US-A- 4 600 207

## Description

### State of the Art

The invention relates to the field of the structure of a single track vehicle with a front fork, particularly to the structure of the suspension and the front wheel suspension.

### Background of the Invention

In the conventional production of single track vehicles, for which the invention is particularly adapted, is the front wheel suspension provided with rigid front fork beams, without the ability to adjust the chassis parameters. For special vehicles, for example racing motorcycles, the system of settings requiring a complete dismantling of a wheel suspension and the replacement of parts (beams and beam inserts) is used to realize the setting of front wheel geometry.

The European patent application no. EP2492176 discloses an invention, which relates to the improvement of the front part of the motorcycle structure. The motorcycle comprises a steering shaft pivotally arranged in a head pipe, wherein handlebars are connected on its upper end, a bridge member connecting the lower part of the handlebar shaft with a fork, further the bridge member comprises protruding stoppers close to the head pipe, which are arranged so as to restrict the steering angle of the handlebar by contacting the stopper with the vehicle body frame.

The device disclosed in the European patent application EP1780109 relates to the control system of the motorcycle and to the motorcycle with the installed control system, which is capable of improving the stability of the motorcycle during cornering. The control system comprises a vehicle speed sensor, a roll rate sensor, a steering angle calculation unit, further a steering angle control unit, an actuator and a rear wheel steering angle sensor. The front wheel steering angle calculation unit acquired a roll rate and vehicle speed, wherein it determines a target steering angle provided that the rear wheel angle is adjusted with a delay. The response between the front wheel and rear wheel control is controlled by a control unit. The device deals with the improvement of driving performance electronically.

In another European patent application EP 2085307 is disclosed an invention, which relates to the efficient steering system. The steering system comprises a control unit connected with an input steering shaft and an output steering shaft, which serve to regulate the steering angle, or turning force between these shafts. The handlebars are connected with the input shaft and a support bracket is connected with the output shaft, wherein the support bracket carries the front wheel of the vehicle. The whole control unit is arranged in a housing, which is placed on the front part of a body frame of a vehicle. The control unit comprises a steering conversion mechanism converting the input angle into a custom output angle and transmitting it to the front wheel. The casing and the body frame are made from the same material and are welded together, or they are made from different materials and are firmly bolted together.

Czech patent application PV 2009-269/CZ, patent CZ303473 B6, discloses a device, which relates to the inclinable chassis designed particularly for four-wheeled road vehicles, comprising a couple of front steering wheels and a couple of rear steering wheels placed in inclinable forks. The invention improves the driving performance during cornering. The inclinable chassis, especially for four-wheeled vehicles, consists of a II-shaped frame with a couple of front steering wheels and a couple of rear steering wheels placed in the inclinable forks. At the end of telescopic transverse beams of the frame and in parallel with the longitudinal beams of the frame, the wheel forks are mounted, pivotally about the axes lying below outer arms. The forks are terminated with upward extending columns of the steering wheels, wherein a power driven parallelogram formed by two uprights and two pull rods is fastened on cross members interconnecting the fork arms located behind the driving wheels. In order to change the angle of the front fork, the steering head is inclined with regard to the vehicle frame. However, this movement requires such a construction embodiment that prevents from using a classical frame construction and instead uses a self-locking screw to perform this movement. The ride dynamics is also modified - the trail of a wheel is increased at elongated wheelbase when the steering head is inclined, as opposed to a slightly decreased trail when the front fork in inclined.

Czech patent application PV 2011-292 discloses a device, which is related to the field of single track vehicles, especially to the suspension of the front wheel of the vehicle. The design of the front wheel suspension of the single-track vehicle allows changing the axis of the front wheel steering when standing and especially when in motion. The front wheel of the single-track vehicle is guided by a front fork being fixedly coupled by means of a suspension lower raft and a suspension upper raft with a steering column. The adapter for handlebars is fixedly coupled with a suspension upper raft. The steering column is pivotally mounted by means of a steering head bearing and a steering bottom bearing relative to a steering head. The steering head is pivoted in a plane X-Z by means of a steering head lower pin in the single-track vehicle frame. Further, the steering head is coupled in swingable manner in the X-Z plane and by means of a steering head upper pin with a self-locking motion screw driven by a rotating self-locking motion screw nut. This nut is located within a bushing of the self-locking motion screw nut through the mediation of an upper bearing of the self-locking motion screw nut and a lower bearing of the self-locking motion screw nut. The bushing of the self-locking motion screw nut is swingably mounted through the mediation of a pin of the bushing of the self-locking motion screw nut in the plane X-Z relative to the single-track vehicle frame. The axis of the pin of the bushing of the self-locking motion screw nut lies in a plane X-Y, intersects the axis of rotation of the self-locking motion screw and is perpendicular to said rotation axis. A toothed wheel provides the drive of the self-locking motion screw nut.

Another Czech patent application PV 1980-1696 discloses an invention, which relates to the motorcycle frame with variable inclination of axis of rotation of the front fork. It deals with the problem of impossibility to change the inclination of axis of the front fork for different driving conditions - e.g. during breaking the springing action occurs and the steering geometry changes. This can result into the loss of control of the motorcycle. A bushing of front fork bearings is swingably attached to the motorcycle frame, wherein it is fastened on one side with the upper bolt in the frame and on the other side it is connected with the frame by the means of pressure cylinder, of which the medium is connected with the pressure pipe with the medium of the front fork pressure cylinder. Thus during the springing action of the front fork, the angle between the front fork and the frame changes so as to preserve approximately identical front fork inclination.

Document DE20315353 U1 discloses a motorcycle steering geometry adjustment assembly having a main frame with a tube for the steering assembly. The tube has a fork upper head with fine teeth which receives the matching outer teeth in the steering inner tube. The relative position of the two sets of teeth is held by a clamp plate. This device allows the inclination to be changed only on discrete levels, not continually.

Document FR2901227 A1 describes a similar device as DE20315353 U1 applicable to motorcycles with a rigid steering head as well as a telescopic fork, wherein it requires manual modification and only an upper beam and front fork pipes allow a change in inclination. A lower beam is fitted with anchors thereby allowing a swinging motion of the front fork pipes.

Both devices disclosed in DE20315353 U1 and FR2901227 A1 do not comprise any back-up mechanism in case of a failure of any part and furthermore, require several mechanical steps so as to change the inclination of the fork - i.e. loosening the screws of beams or loosening the mats of a steering shaft. Inclination of the fork could not be changed while the motorcycle is in motion.

The device described in ITBO20080521 A1 seemingly operates in a similar manner than the present invention; however, it uses fluid bearings instead of original bearings and therefore does not allow a simple rearrangement of the fork. Moreover, this device seems to be suitable for low loads due to load force transfer via fluid planes, and is hence limited for single track vehicles of a bicycle type, not motorcycles. Although the document teaches a variant for higher loads as well, it is only by introducing teeth in the fluid planes. In such case, there is no possibility of automation or continuous rearrangement during the vehicle's operation.

Document US4600207 A discloses a similar device as described in CZ303473 B6. This device considerably interferes with the existing frame of a vehicle and its installation would require a significant modification or replacement of chassis elements. In addition, the device lacks self-locking elements, which are needed to secure the vehicle's operation in case of a failure of force transfer mechanics.

None of the above described technical solutions has the same structure in comparison with the present invention. These are known technologies in the field of single-track vehicle structure and majority of them is conventionally used.

The object is to provide a device for setting driving geometry of the front wheel of a vehicle, especially a motorcycle, with the possibility of continuous regulation while driving.

### Summary of the Invention

The above mentioned object is achieved with a device for a single track vehicle with a front fork for changing driving geometry comprising an upper beam and a lower beam provided, symmetrically relative to the longitudinal vehicle axis, with opening for front fork pipes, and connected together with a steering shaft, which is placed in a vehicle frame using a couple of steering head bearings, while the lower beam is swingably connected with the steering shaft relative to the longitudinal vehicle axis, characterized in that the upper beam is provided with a steering axis nut housing pivotally as well as slidingly in the longitudinal vehicle axis, connected with the steering shaft and an actuator of the relative movement of the upper beam and the steering axis comprising motion screws and a rotational movement source for rotation of the motion screws and the subsequent sliding movement of the nut housing of the steering axis.

The summary of the invention is a design solution for setting the front wheel geometry of the vehicle, especially a motorcycle, with a possibility of continuous regulation while driving. It occurs by the means of changing the front fork inclination of the vehicle. The device is designed as simple and effectively as possible for this capability. The motion of the upper beam of the front fork is achieved using the nut and two motion screws. The lower beam allows swinging motion of the fork in a longitudinal vehicle direction around the centre of the joint bearing of the lower beam in relation to the steering shaft. The change of the front fork inclination together with other related parameters, for example headroom, caster, and the like, are realized by these motion.

The major advantage and difference in comparison to the present state of the art is the fact that the device is applicable on already constructed vehicles. The application occurs without the intervention to the supporting parts (frame, the body), by replacing the rigid system of the lower beam, the upper beam, and the steering shaft, with a system of the lower beam, the upper beam, the steering shaft, and the actuator according to the invention.

It is neither negligible that it is possible, after a certain modification, to apply the device on all, especially single-track vehicles with conventional front wheel steering in rigid steering column, for example using telescopic front fork. The device is a compact part, which almost unnoticeably intervenes into the vehicle structure with its volume or weight.

Another considerable advantage is that in comparison to the majority of proposed inventions, the device is still safe during inactivity or when being out of order, and the driving conditions do not change and there is no risk of an accident.

The device uses a different beam fork construction of a single-track vehicle than the standard one. This structure allows the movement of the upper fork beam in relation to the rigid steering axis. The steering axis therefore stays in a stable position in relation to the vehicle frame, however, the angle between the fork axis and steering axis changes. This change results in changing driving conditions, especially the moment arm resulting from the gyroscopic effect of the front wheel having influence on the frame, changing the driving stability and manoeuvrability by changing the caster.

To maximize the potential of changing the driving conditions, the device may be supplemented with a control system of fork axis inclination, preferably electronic control logic.

### Description of the Drawings

The device is further described by means of drawings, where Fig.1 illustrates a section of a real device embodiment with straight toothing of stepper motor and a hinge ball bearing in the lower beam, Fig. 2a illustrates a side view on the device with a worm drive, Fig. 2b illustrates a front view on the device embodiment with a worm drive, Fig. 3a illustrates a sectional top view on another possible device embodiment variant with straight toothing of stepper motor and a hinge ball bearing in the lower beam, and Fig. 3b illustrates a side view on the real device embodiment with a straight tooting of stepper motor and a hinge ball bearing in the lower beam.

### Description of the Preferred Embodiment

The device for changing steering geometry, which comprises functionally modified basic parts, namely a lower beam **9** and an upper beam **2** of the vehicle front fork, a steering shaft **11,** of which the axis is identical to steering wheel axis, and an actuator of their relative movement, which consists of several parts, i.e. a movable nut housing **3** of the steering axis **14,** motion screws **4**, gear wheels **5** of the motion screws **4** and a rotational movement source **13**. This movement is provided by rotation of the motion screws **4,** wherein all of these basic parts create a compact device being assembled as an integral part of the wheel suspension, not differing in any way from the classic rigid upper beam of the fork in its shape and size.

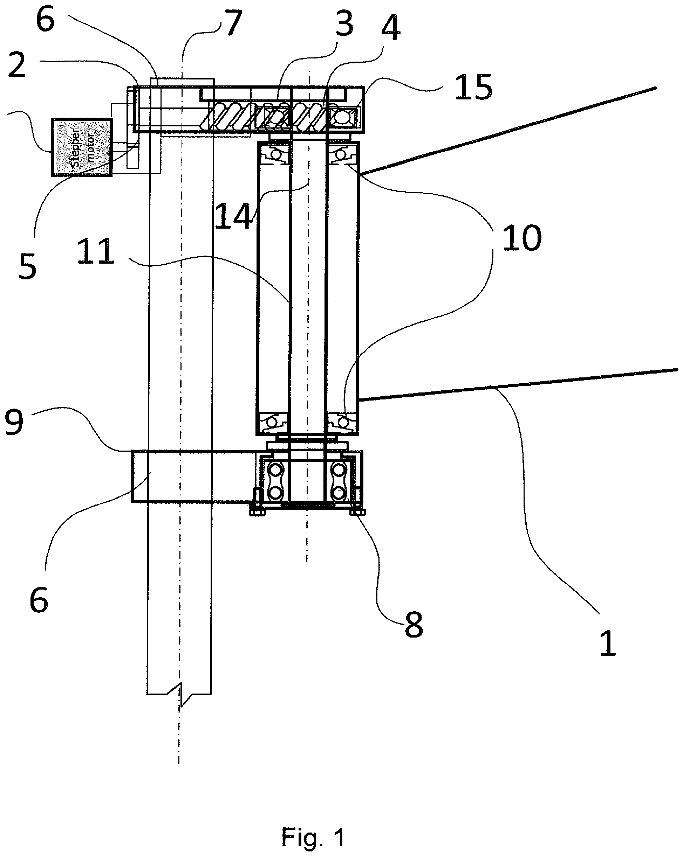

The Fig. 1 illustrates a device embodiment for changing steering geometry with a straight toothing of the rotational movement source **13**, e.g. a stepper motor, and a joint bearing **8** of the lower fork beam, e.g. a hinge ball bearing. The device in this embodiment deals with the placement of steering axis **14** in a stable position that is realized using a standard placement in the single-track vehicle frame **1** using a couple of steering head bearings **10**. On the upper beam is slidably attached a sliding nut housing **3**, through which steering shaft **11** passes, which is arranged in the joint nut bearing **15** to the steering shaft, wherein the sliding nut housing **3** is guided by the means of motion screws **4**, which are arranged in the upper beam and at the same time at the gear housing **12** mechanically connected with the rotational movement source **13**. As long as the desirable change of the angle of the front fork axis **7** in relation to the steering axis **14** is required, it is necessary to slide the sliding nut housing **3** in the longitudinal vehicle axis. This movement is realized by the rotation of the motion screws **4** provided with gear wheels **5**. Their movement is stabilized using the gear housing **12** of the motion screws **4**, which engages with the rotational movement source **13**. The upper beam **2** moves in relation to the joint bearing **8** of the lower fork beam **9** in curved trajectory around the centre of the joint bearing **8**. This movement requires the nut joint bearing **15** in relation to the steering shaft **11** allowing an axial movement as well. By the above described movement, an inclination of the front fork axis **7** in relation to the steering axis **14** in a plane identical to the longitudinal vehicle plane is realized.

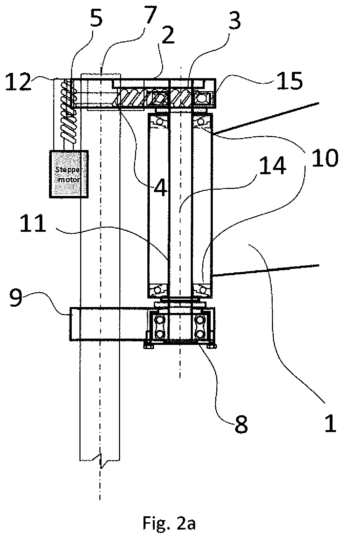

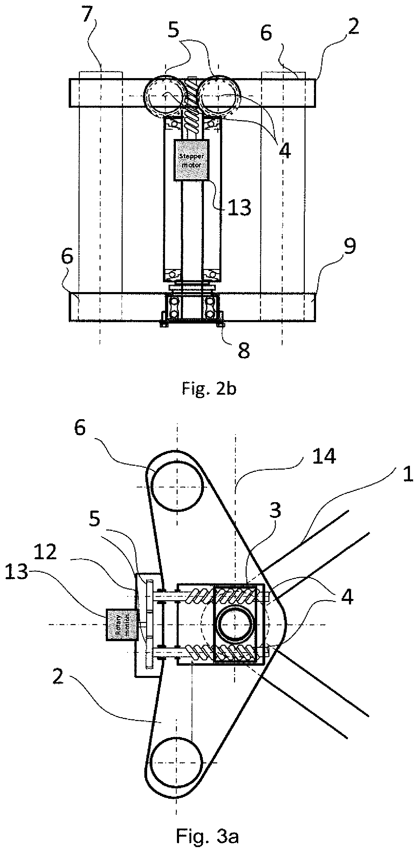

An alternative device embodiment for changing driving geometry, which is provided with a worm drive, is shown in the Figs. 2a and 2b. The device is applied on a standard fork arrangement in the steering head using bearings **10** with oblique contact. In such a case, a gear consisting of gear wheels **5** of the motion screws **4** with a side toothing, is replaced with a worm drive from the rotational movement source **13**. This structure considerably reduces the inbuilt space requirements and allows the usage of a smaller motor with operating speed thanks to its high gear ratio.

As it is apparent form the Fig. 2a, the device deals with the steering axis arrangement into a stable position, which is realized using a standard arrangement in the single-track vehicle frame **1** by the means of a couple of bearings **10** with an oblique contact with the steering head. The joint bearing **8** is realized using double-row ball bearing.

The arrangement of the gear mechanism consisting of the gear wheels **5** of the motion screws **4** and of the shaft of rotational movement source **13**, transmitting its moment on gear wheels using a worm gear, is apparent from the Fig. 2b.

The rotational movement source **13** is preferably vertically oriented, what results in saving the installation space. Another advantage is the possibility of using a smaller motor with higher operational speed thanks to the higher gear ratio helix.

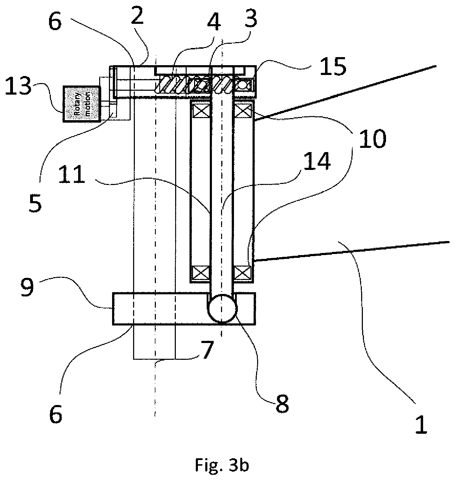

The examples of real embodiments of the device for changing steering geometry with a straight toothing of a stepper motor and a simple hinge ball bearing are illustrated in the Figs. 3a and 3b. The device is structurally identical to the above mentioned devices, however, the gear wheels **5** of the motion screws **4** are provided with straight toothing, by the means of which also the transition of the torque from the rotational movement source **13** is achieved. The joint bearing **8** of the lower beam of the front fork **9** is solved using a simple ball bearing. The device for changing steering geometry works on the same principle as the above described devices. The joint nut bearing **15** in relation to the steering shaft is realized using the hinge ball bearing allowing an axial sliding movement along the shaft, which is necessary for kinematic functionality of the device. The exemplary realization of the axial movement of the joint nut bearing **15** to the steering shaft **11** is provided by the means of a shaft with hardened surface and a sliding joint nut bearing **15**, or it is possible to provide the joint nut bearing **15** with an inner sliding, Teflon, or ball bearing.

### Industrial Applicability

The device for changing steering geometry is applicable in the field of single-track and multiple-track vehicle construction, especially motorcycles. It is suitable for all types of single-track vehicles, which use conventional front wheel steering using the telescopic fork arranged in the steering head using two rigid rotational fork beams.

### List of Reference Numbers

- 1: frame
- 2: upper beam
- 3: sliding nut housing
- 4: motion screws
- 5: gear wheels
- 6: opening for the front fork pipe
- 7: front fork axis
- 8: joint bearing of the lower beam
- 9: lower beam
- 10: steering head bearings
- 11: steering shaft
- 12: motion screws gear housing
- 13: rotational movement source
- 14: steering axis
- 15: joint nut bearing to the steering shaft

## Claims

1. A device for a single track vehicle having a front fork for changing the steering geometry of the front fork, the device comprising an upper beam (**2**) and a lower beam (**9**) provided, symmetrically relative to a longitudinal vehicle axis, with openings (**6**) for front fork pipes, and connected together with a steering shaft (**11**), which is placed in the vehicle frame (**1**) using a couple of steering head bearings (**10**), while the lower beam (**9**) is swingably connected with the steering shaft (**11**) relative to the longitudinal vehicle axis, **characterized in that** the upper beam (**2**) is provided with a nut housing (**3**) of a steering axis (**14**) pivotally as well as slidingly in relation to the longitudinal vehicle axis, connected with the steering shaft (**11**) and an actuator of the relative movement between the upper beam (**2**) and the steering shaft (**11**) comprising motion screws (**4**) and a rotational movement source (**13**) for rotation of the motion screws (**4**) and the subsequent sliding movement of the nut housing (**3**) of the steering axis (**14**) relative to the upper beam (**2**).

2. The device according to the claim 1, **characterized in that** between the motion screws (**4**) and the rotational movement source (**13**) is a gear mechanism in the form of gear consisting of gear wheels (**5**) of the motion screws (**4**) as well as a gear wheel (**5**) or worm gear of the rotational movement source (**13**).

3. The device according to any of the previous claims, **characterized in that** for safe fixation of sliding nut housing (**3**) of the steering axis (**14**), the motion screws (**4**) are provided with a self-locking screw.

## Patentansprüche

1. Eine Vorrichtung für ein Einspurfahrzeug mit einer Vordergabel zur Änderung der Lenkgeometrie der Vordergabel, wobei die Vorrichtung einen Oberbalken (**2**) und einen Unterbalken (**9**) aufweist, die symmetrisch relativ zu einer Fahrzeuglängsachse mit Öffnungen (**6**) für Vordergabelrohre versehen sind, und die mit einer Lenkwelle (**11**) zusammen verbunden sind, die in dem Fahrzeugrahmen (**1**) mittels einem Paar von Lenkkopflagern (**10**) angeordnet ist, wobei der Unterbalken (**9**) schwenkbar mit der Lenkwelle (**11**) relativ zur Fahrzeuglängsachse verbunden ist, **dadurch gekennzeichnet, dass** der Oberbalken (**2**) mit einem Muttergehäuse (**3**) einer Lenkachse (**14**) versehen ist, das drehbar als auch gleitend in Bezug auf die Fahrzeuglängsachse ist, und das mit der Lenkwelle (**11**) und einem Aktuator der Relativbewegung zwischen dem Oberbalken (**2**) und der Lenkwelle (**11**) verbunden ist, der Bewegungsschrauben (**4**) und eine Drehbewegungsquelle (**13**) aufweist, zur Drehung der Bewegungsschrauben (**4**) und der anschließenden Gleitbewegung des Muttergehäuses (**3**) der Lenkachse (**14**) relativ zum Oberbalken (**2**).

2. Die Vorrichtung nach Anspruch 1, **dadurch gekennzeichnet, dass** es zwischen den Bewegungsschrauben (**4**) und der Drehbewegungsquelle (**13**) ein Getriebemechanismus gibt, in Form eines aus Zahnrädern (**5**) der Bewegungsschrauben (**4**) sowie einem Zahnrad (**5**) oder Schneckenrad der Drehbewegungsquelle (**13**) bestehenden Getriebe.

3. Die Vorrichtung nach einem der vorhergehenden Ansprüche, **dadurch gekennzeichnet, dass** zur sicheren Fixierung des gleitenden Muttergehäuses (**3**) der Lenkachse (**14**), die Bewegungsschrauben (**4**) mit einer selbsthemmenden Schraube versehen sind.

## Revendications

1. Un dispositif pour un véhicule à voie unique ayant une fourche avant pour changer la géométrie de direction de la fourche avant, où le dispositif comprend une poutre supérieure (**2**) et une poutre inférieure (**9**) munies, symétriquement par rapport à un axe longitudinal du véhicule, des ouvertures (**6**) pour des tubes de fourche avant, et reliées ensemble à un arbre de direction (**11**), qui est placé dans le châssis de véhicule (**1**) à l'aide d'une paire de paliers de tête de direction (**10**), où la poutre inférieure (**9**) est reliée de manière oscillante à l'arbre de direction (**11**) par rapport à l'axe longitudinal du véhicule, **caractérisé en ce que** la poutre supérieure (**2**) est munie d'un logement d'écrou (**3**) d'un axe de direction (**14**) de manière pivotante aussi que coulissante par rapport à l'axe longitudinal du véhicule, relié à l'arbre de direction (**11**) et à un actionneur du mouvement relatif entre la poutre supérieure (**2**) et l'arbre de direction (**11**) comprenant des vis de mouvement (**4**) et une source de mouvement de rotation (**13**) pour la rotation des vis de mouvement (**4**) et le mouvement coulissant ultérieur du logement d'écrou (**3**) de l'axe de direction (**14**) par rapport à la poutre supérieure (**2**).

2. Le dispositif selon la revendication 1, **caractérisé en ce qu'**entre les vis de mouvement (**4**) et la source de mouvement de rotation (**13**) il y a un mécanisme d'engrenage sous la forme d'un engrenage constitué de roues d'engrenage (**5**) des vis de mouvement (**4**) ainsi qu'une roue d'engrenage (**5**) ou un engrenage à vis sans fin de la source de mouvement de rotation (**13**).

3. Le dispositif selon l'une quelconque des revendications précédentes, **caractérisé en ce que** pour la fixation sûre du logement d'écrou (**3**) coulissant de l'axe de direction (**14**), les vis de mouvement (**4**) sont munies d'une vis auto-bloquante.
